# EUROPEAN PATENT SPECIFICATION

(11) **EP 1 300 298 B1**
(45) Date of publication and mention of the grant of the patent: **16.11.2005**
(21) Application number: 02021400.3
(22) Date of filing: 24.09.2002
(51) Int. Cl.: B60R 21/20

(54) **Airbag module**
Gassack-Modul
Module d'airbag

(30) Priority: 04.10.2001 DE 10148829
(43) Date of publication of application: 09.04.2003
(73) Proprietor: KEY SAFETY SYSTEMS, INC., Sterling Heights, Michigan 48314 (US)
(72) Inventor: Lincoln, Paul, 55283 Nierstein (DE); Wackenroder, Thilo, 65817 Eppstein (DE); Weyrauch, Dirk, 64646 Heppenheim (DE); Volkmann, Matthias, 61476 Kronberg/Ts (DE); Zirfas, Hans-Peter, 55257 Budenheim (DE)
(74) Representative: Müller-Boré & Partner Patentanwälte

(56) References cited:
- US-A- 5 356 175
- US-A- 5 433 472
- US-A- 5 456 489
- US-A- 5 639 112
- US-A- 5 839 751
- "SPACER FOR MOUNTING A SHORTER INFLATOR" RESEARCH DISCLOSURE, KENNETH MASON PUBLICATIONS, HAMPSHIRE, GB, no. 399, 1 July 1997 (1997-07-01), pages 436-438, XP000726564 ISSN: 0374-4353

## Description

The invention relates to an airbag module.

In particular for side and passenger airbag modules, housings made of synthetic material are known into which an inflator and a folded-together airbag are inserted. The inflator is conventionally secured to the housing by screws or clamps. This requires a large number of individual parts and a complicated procedure for mounting the airbag module.

As an example, US-5,639,112 relates to an airbag module including an inflator, a canister containing the inflator, an airbag and a retainer assembly, which contains the airbag in an uninflated condition, wherein the retainer assembly includes a pair of retainers that are fastened together with an edge portion of the airbag arranged between the retainers.

US-5,839,751 relates to a gas bag restraining module having a housing, an inflation device located therein, and a folded gas bag, which has an attachment section fixed to the housing and surrounding an inflation aperture, wherein the attachment section is provided with an attachment frame, which is inserted in the upper section of the housing.

US-5,433,472 relates to a device for securing a passenger-side inflator to a module housing without the use of fasteners or special tools, having an elastically flexible cap formed into one wall of the canister engaging with a boss or recessed section at one end of the inflator, wherein a raised section may be formed in the base of the inflator, which raised section engages with the outer wall of the inflator causing it to further engage with the canister.

The research disclosure "spacer for mounting a shorter inflator" by Kenneth Mason Publications (Hampshire, GB), no. 399, July 1, 1997, discloses a passenger-side airbag module having an inflatable airbag attached to and folded inside a reaction canister, wherein the airbag inflator is secured between opposing end walls of the reaction canister, and wherein a spacer is provided, which allows a relatively short inflator to be mounted between the end walls of a reaction canister which was originally designed for a relatively long inflator.

It is the object of the invention to provide an airbag module having a housing which make possible a smaller number of individual parts and simplified mounting.

This object is achieved by an airbag module having the features specified in Claim 1. Preferred embodiments can be seen in the subclaims.

With the airbag module according to the invention, the inflator is merely secured in the housing by form fit, without additional clamps or screwing elements being required to fix the inflator. The inflator is merely pushed into a securing device and fixed by an additional securing element which is simply pushed into the housing. The securing element is supported against the housing and abuts against the inflator at the longitudinal end thereof. After being pushed in, the securing element prevents the inflator from being able to move in its longitudinal direction in the securing device. The housing may be made very simply in one piece from synthetic material, since no additional clamps or screwing elements have to be provided. In order to fix the inflator, only a single additional component, namely the securing element, is then required. This simplifies mounting and reduces manufacturing costs.

The securing device surrounds the inflator in the vicinity of its second longitudinal end. This has the effect that the inflator is fixed in each case in the vicinity of its two longitudinal ends in the radial direction as well, that is to say in a direction transverse with respect to its longitudinal axis. At the first longitudinal end, this is preferably performed by the abutment, which is shaped appropriately to surround the inflator peripherally at least in certain regions. At the second longitudinal end, radial fixing is performed by the securing device into which the inflator is pushed.

Furthermore, the abutment is a cutout in a housing portion, preferably a housing wall, in which the inflator engages, with the inflator having in the region of its first longitudinal end preferably at least one shoulder which abuts against the edge of the cutout and supports the inflator in the longitudinal direction thereof. Because the abutment is shaped as a cutout in which the inflator engages by means of its first longitudinal end, radial fixing of this end of the inflator is also achieved in a simple manner. If in addition a shoulder is provided on the first longitudinal end of the inflator, the cutout may be a through hole. This makes it possible for a connection for electrical connecting cables to be provided at the first longitudinal end of the inflator, in order to trigger the inflator. Once the inflator has been inserted into the cutout, part of its first longitudinal end is accessible through the cutout, so that in this region for example a plug may be inserted. The shoulder which abuts in the edge region of the cutout in this case ensures, together with the securing element at the opposing longitudinal end, that there is fixing in the longitudinal direction of the inflator.

The securing element is a form-fitting and/or force-fitting component, in particular a block or wedge which fills a free space between the second longitudinal end of the inflator and an opposing housing portion. The opposing housing portion is preferably an external wall of the housing. The block may be made for example of synthetic material. The block may be used to achieve very simple fixing of the inflator in the housing, since the block merely has to be pushed into the housing. For this purpose, advantageously further guide elements may be provided on the housing for precise positioning of the block. A wedge-shaped securing element may additionally be wedged or clamped in, in order to hold the inflator in its longitudinal direction without play.

Advantageously, the securing element is arranged on the housing by way of a non-detachable, in particular plastically and/or elastically deformable connection and may be brought into a position in the region of the second longitudinal end of the inflator without in so doing breaking the connection between the securing element and the housing.

Preferably, the securing element may be put into the housing through a cutout so that it comes into contact with the second longitudinal end of the inflator. For this purpose, a cutout may be provided for example on a side wall of the housing and the securing element may be pushed into this cutout from the side. The securing element may already be connected to the housing before insertion, for example it may be constructed in one piece with the latter, so that all that is necessary is for the securing element to be pressed into the housing. In so doing, the original connection between the housing and the securing element may be severed.

The housing preferably has at least one cover, and the securing element is a projection on the cover such that the projection juts into the interior of the housing and is in contact with the second longitudinal end of the inflator. An embodiment of this kind makes it possible to assemble the airbag module in a very simple manner. Once the inflator and the folded-together airbag have been inserted into the housing, the cover is placed on the housing. This brings the projection made on the cover into engagement with the second longitudinal end of the inflator, and this secures the latter in the housing. Thus, no additional securing steps for securing the inflator in the housing are required. In the cover, predetermined break points are preferably provided which enable the airbag to come out. During this, the projection which serves as the securing element is preferably arranged outside the exit opening for the airbag so that securing of the inflator remains ensured even when the airbag comes out of the airbag module.

The securing element is preferably an annular clip which surrounds the inflator at its outer periphery. The annular clip forms a closed ring which completely surrounds the inflator, so that the latter is fixed in all radial directions. The securing device and preferably the annular clip are preferably constructed such that they surround the inflator without play and fix it in the radial direction. For this purpose, elastic elements such as spring tongues may be provided on the inner periphery of the annular clip.

Preferably, the annular clip projects from an inner side of the housing. In this arrangement, preferably a portion of the ring formed by the annular clip may be formed by the inside of the housing.

Preferably, the housing and the securing device are made in one piece from synthetic material or from cast light metal. This further simplifies mounting, since there are no individual parts which have to be put together. The securing device and the housing can, rather, preferably be injection molded from synthetic material in one operational step.

The airbag module has, in addition to an airbag, at least a housing and an inflator. For mounting, the inflator is first pushed into a securing device on the housing in a longitudinal direction of the inflator, with the securing device peripherally surrounding the inflator. Then the inflator is brought into contact by means of its first longitudinal end with an abutment on the housing. Finally, a securing element is inserted into the housing behind the second longitudinal end of the inflator opposing the first longitudinal end, and fixes the inflator in its longitudinal direction with form fit. The securing element is supported against the housing and the securing element comes into contact with the second longitudinal end of the inflator, so that the inflator is fixed with form fit in its longitudinal direction between the abutment and the securing element. Fixing in the directions transverse with respect to the longitudinal direction of the inflator is performed by the securing device, which surrounds the inflator at its periphery.

Preferably, the inflator is first pushed into the securing device substantially in its longitudinal direction by means of its second longitudinal end. Here, the inflator can first of all be pushed into the securing device slightly obliquely and then be pivoted into the correct axial position. Then the inflator is moved in the opposing direction, that is to say in the direction of its first longitudinal end. In so doing, the first longitudinal end comes into contact with the abutment. Then the securing element is inserted behind the second longitudinal end, so that the inflator is held between the abutment and the securing element.

Preferably, the securing element is connected to the housing in a starting position by way of a predetermined break point, with the predetermined break point being severed when the securing element is inserted, and the securing element being moved into a second position behind the second longitudinal end of the inflator. This embodiment has the advantage that the securing element does not have to be stored and handled as a separate component. Rather, it can be made in one piece with the housing and be detached from the housing at the predetermined break point before or when it is inserted into the housing. Alternatively, the securing element can be secured to the housing by means of a hinge, for example a film hinge, and be pivoted into its final position in order to fix the inflator. All these embodiments make it possible to make the securing element in one piece with the housing, preferably from synthetic material.

Advantageously, the securing element is connected non-detachably, in particular plastically and/or elastically deformably, to the housing in a starting position, with the securing element being movable into a second position behind the second longitudinal end of the inflator without its connection to the housing being broken at the same time.

The inventive housing for an airbag module has two mutually opposing housing portions. These two opposing housing portions are preferably parts of the outer wall of the housing. Between the two opposing housing portions there is defined a receiving space for an inflator. In a first of the two housing portions a receiver is constructed. This serves to receive a first longitudinal end of an inflator to be inserted. Arranged spaced from the first housing portion is a securing clip which is arranged coaxially with respect to the receiver. Preferably, the securing clip is arranged such that with an inflator inserted the receiver lies at a first longitudinal end of the inflator, while the securing clip lies in the vicinity of the second longitudinal end of the inflator. The coaxial arrangement of the securing clip and the receiver makes it possible for the inflator, when it is inserted, to be pushed first into the securing clip and then to be moved back in order to come into engagement with the receiver. Furthermore, the housing has a securing element which may be inserted in the vicinity of, preferably adjacent to, the second housing portion. The securing element is in this case positionable such that the spacing between the securing element and the abutment or receiver substantially corresponds to the length of the inflator, so that the latter can be held in its longitudinal direction with form fit. The securing clip here serves to radially secure the inflator. Additionally, the receiver is preferably also constructed such that it fixes the inflator in the radial direction, that is to say transversely with respect to its longitudinal axis.

Preferably, the securing clip is made in one piece with the housing, preferably from synthetic material or cast light metal. This makes it possible to make the housing at very low cost without additional steps being required for mounting.

Preferably, the securing clip projects from a wall, and furthermore preferably from the base, of the housing and forms with the latter a closed ring, with a colour which corresponds at least to the surface of the securing clip projected onto the housing wall being made in the housing wall in the region of the securing clip. This arrangement makes very simple injection molding of the housing possible without complicated movable cores having to be provided. As a result of this cutout, undercuts in the region of the securing clip are avoided. During the injection molding, part of a mold half may extend through the cutout and thus form a mold for the interior of the securing clip. Despite the cutout, the securing clip forms, together with the regions of the housing base adjacent to the cutout, a closed ring into which the inflator may be inserted.

Preferably, the securing element is dimensioned such that it fills a free space between an inserted inflator and the second housing portion. The securing element is in this case constructed substantially as a block or wedge which is simply pushed in between the inflator and the second housing portion in order to fix the inflator in the housing with form fit.

The securing element may preferably be a projection on a cover of the housing. A cover of this kind closes off the airbag housing to the outside and preferably forms part of an inner cladding of a vehicle. In the cover, predetermined break points are preferably provided which enable an airbag to come out of the housing. The arrangement of the securing element as a projection of a cover of this kind simplifies mounting of an airbag module, since when the cover is placed on the housing the inflator is automatically fixed by the projection, which juts inwards into the housing. It is thus possible to dispense with additional mounting steps for securing the inflator in the housing.

Alternatively, there is provided in the housing in the vicinity of the second housing portion an opening through which the securing element may be inserted. The securing element may for this purpose be constructed for example in the form of a peg. The opening is positioned in the housing such that an inserted securing element comes into contact with a longitudinal end of an inflator in order to fix the latter in the housing in the direction of its longitudinal axis with form fit.

Preferably, the securing element is made in one piece with the housing such that it has a cross-section which corresponds to that cross-section of the opening in the housing and projects outwards from the housing in its starting position, with a predetermined break point being made between the securing element and the housing. This arrangement makes it possible for the securing element merely to have to be pressed completely into the opening in the housing in order to secure an inflator in the housing. In so doing, the predetermined break point breaks and the securing element enters the interior of the housing, where it comes into contact with a longitudinal end of an inflator in order to secure the latter. Alternatively, instead of a predetermined break point the securing element may for example be connected to the housing by way of a hinge, so that it can be pivoted into the housing in order to secure the inflator while the securing element is arranged on the housing by way of a non-detachable, in particular plastically and/or elastically deformable connection and may be brought into a second position. Both embodiments make it possible to make the securing element in one piece with the housing in one operational step.

The invention will be described by way of example below, with reference to the attached figures, in which:
Fig. 1 is a perspective diagrammatic view of the inventive housing for an airbag module,
Fig. 2 shows the housing according to Fig. 1, on inserting an inflator,
Fig. 3 shows the housing according to Figs. 1 and 2, with the inflator inserted,
Fig. 4 is a perspective view of a securing element,
Fig. 5 shows the housing with the inflator according to Fig. 3 inserted, with the securing element according to Fig. 4 inserted,
Fig. 6 is a perspective view of an alternative housing with the inflator inserted,
Fig. 7 is a diagrammatic sectional view of an alternative embodiment of the housing with the inflator inserted, before insertion of a securing element,
Fig. 8 is a sectional view according to Fig. 7, with the securing element inserted,
Fig. 9 is a diagrammatic sectional view of a further embodiment of the invention, and
Fig. 10 is an enlarged detail view A from Fig. 9.

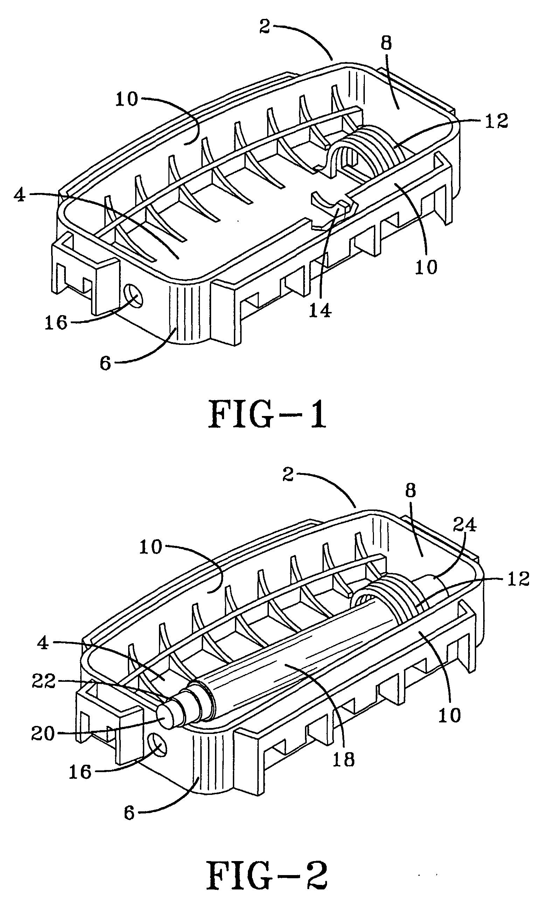

Fig. 1 shows an airbag housing 2 into which an inflator and an airbag are inserted. The housing is preferably injection molded in one piece from synthetic material; however, it may also be made in one piece from cast light metal. The housing has a housing base 4 and two side walls 10 which are substantially perpendicular thereto and form longitudinal sides of the housing. The two longitudinal sides 10 are connected to one another by the two opposing side walls or transverse walls 6 and 8. Furthermore provided in the housing is a securing clip 12 which extends from the housing base 4. The securing clip 12 defines, together with the housing base 4, an opening which corresponds substantially to the cross-section of an inflator to be inserted. Furthermore provided on the housing base is a support web 14 which supports an inflator to be laid in. The support element or support web 14 is preferably arranged spaced from the securing clip 12. The upper side of the support web 14 and the inside of the securing clip 12, facing the base 4, substantially define the peripheral shape of an inflator to be inserted. Provided in the transverse wall 6 is a receiver or opening 16 into which a longitudinal end of an inflator can be inserted. The securing clip 12 is arranged spaced from the transverse wall 6, closer to the transverse wall 8. The support web 14 is arranged between the securing clip 12 and the transverse wall 6.

Fig. 2 shows the airbag housing according to Fig. 1 while an inflator 18 is being inserted. The inflator 18 tapers at a first longitudinal end 20 so that a shoulder 22 is made there. The tapered longitudinal end 20 has a diameter or cross-section which corresponds to the contour of the opening 16 in the transverse wall 6. When the inflator 18 is inserted into the housing 2, the inflator 18 is first pushed slightly obliquely from above through the open side 2 of the housing and slightly obliquely underneath the securing clip 12. This slightly oblique pushing in is possible because the spacing between the securing clip 12 and the base 4 of the housing is selected such that it is larger than the extent of the inflator in this direction. The play created in this way corresponds substantially to the thickness of the support web 14. Once pushed underneath the securing clip 12, the inflator 18 is laid or pivoted into the housing 2 such that it lies on the support web 14 (not visible in Fig. 2). In this condition, the inflator 18 is fixed in the radial direction, that is to say transversely with respect to its longitudinal direction, between the securing clip 12 and the support web 14.

In the next step, the inflator 18 is displaced in its longitudinal direction such that the first longitudinal end 20 enters the opening 16 in the transverse wall 6. At the same time, the shoulder 22 comes to abut against the periphery of the opening 16 on the inside of the transverse wall 6. Furthermore, the inflator 18 is fixed in the opening 16, also in the radial direction, by the tapered longitudinal end 20.

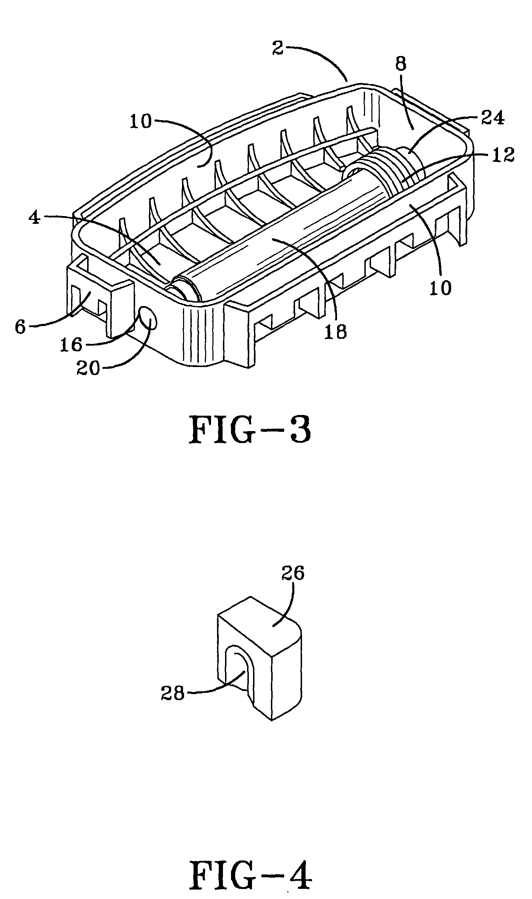

This condition is shown in Fig. 3. Here, the tapered first longitudinal end 20 of the inflator is in engagement with the opening 16 in the transverse wall 6 of the housing 2. Preferably, an electrical connection of the inflator is provided at the first longitudinal end 20. This electrical connection is accessible from the outside through the opening 16, so that, once assembly thereof is complete, the airbag module can easily be connected to the external triggering electronics when installed in a vehicle.

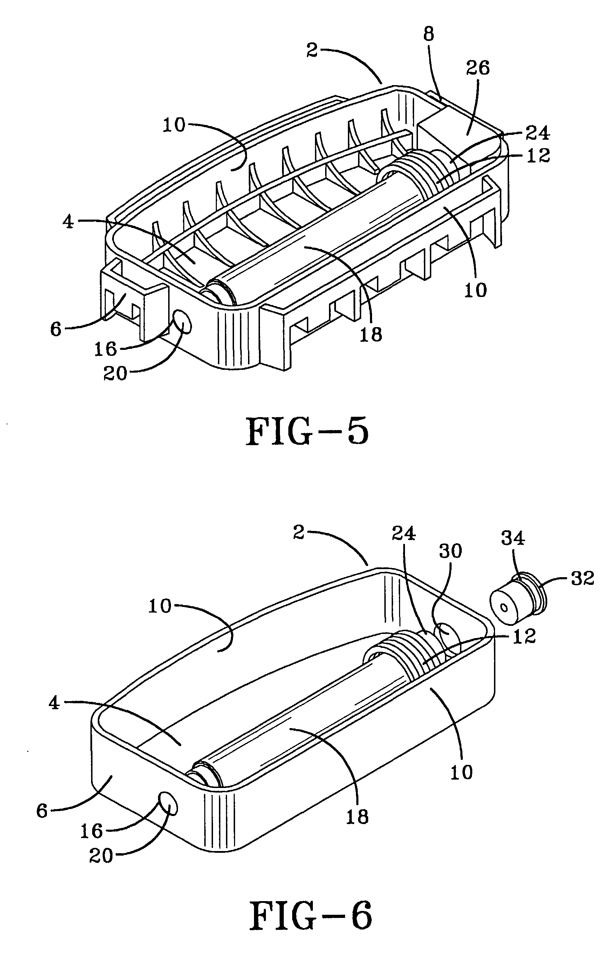

Fig. 4 shows a perspective view of a securing element 26 which can be inserted into the housing 2 for the purpose of fixing the inflator 18. The securing element 26 is constructed in the form of a block or wedge and has on one side an abutment surface 28 which is preferably configured to correspond to the shape of the second longitudinal end 24 of the inflator 18. The abutment surface 28 has a depression or groove which extends in the direction of inserting the securing element 26 and in which the second longitudinal end 24 engages. This has the effect of fixing the securing element 26 in the transverse direction, that is to say the direction transverse with respect to the longitudinal direction of the inflator 18, so that it cannot be displaced from the secure position. In the direction in which it is inserted, the securing element 26 is preferably fixed by a cover or lid of the housing.

Fig. 5 shows the next step in mounting the airbag module. Here, taking as the basis the condition shown in Fig. 3, the securing element 26 is additionally inserted into the housing 2. The securing element is inserted between the second longitudinal end 24 of the inflator 18 and the inside of the transverse wall 8 of the housing 2. Here, the abutment surface 28 of the securing element 26 comes into contact with the second longitudinal end 24 of the inflator 18, while the opposing surface of the securing element 26 comes into contact with the inside of the transverse wall 8 of the housing. In this way, the securing element 26 fills up the space between the transverse wall 8 and the inflator 18. Because the inflator 18 abuts against the periphery of the opening 16 in the side wall 6 at its opposing first longitudinal end 20, by means of the shoulder 22, it is now fixed by the securing element 26 between the two transverse walls 6 and 8 of the housing 2. Fixing in the radial direction, that is to say transversely with respect to the longitudinal direction between the two longitudinal ends 20 and 24 of the inflator 18, is performed by the securing clip 12, the support web 14 and the opening 16.

Fig. 6 shows an alternative embodiment of the invention. The arrangement corresponds substantially to the arrangement shown in Fig. 3, and for this reason the same reference numerals have been retained. As an alternative to the arrangement in Fig. 3, an opening 30 is also made in the transverse wall 8, and a securing element in the form of a plug 32 is inserted into this opening 30. In this arrangement, the plug 32 is dimensioned such that in the inserted condition it comes into abutment with the second longitudinal end 24 of the inflator 18. In this way, the inflator is fixed in its longitudinal direction between the transverse walls 6 and 8 of the housing 2 in a manner similar to the embodiment described with reference to Fig. 5. Peripherally, the plug 32 has a bead 34 with the aid of which it latches onto the transverse wall 8.

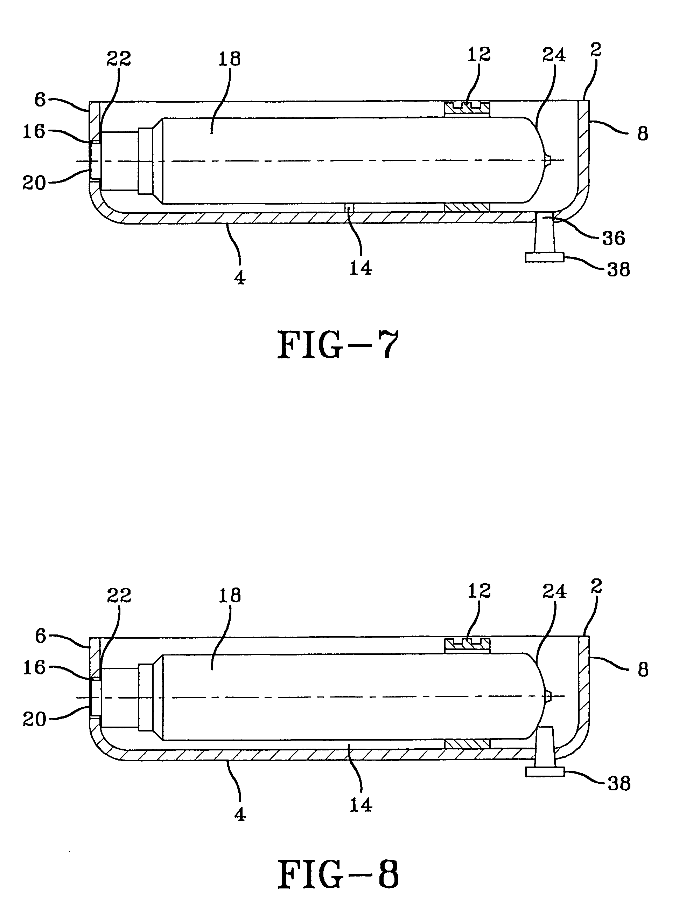

Fig. 7 is a diagrammatic sectional view of a further alternative embodiment. This embodiment also corresponds substantially to the embodiments described previously. It differs only in the shaping of the securing element. In Fig. 7, the inflator 18, as shown in Fig. 3, is inserted into the housing 2. At the same time, the inflator 18 is arranged with its first tapered longitudinal end 20 in the opening 16 in the transverse wall 6 such that the shoulder 22 comes into abutment against the transverse wall 6. Furthermore, the inflator 18 is additionally secured in the radial direction between the securing clip 12 and the support web 14. Radial securing is ensured at the one end by the opening 16 and at the opposing longitudinal end of the inflator by the securing clip 12 and the support web 14. In this embodiment, the securing element is a pin or plate 36 which may be inserted into an opening 38 in the base 4 of the housing 2. The opening 38 is arranged such that in the inserted condition the pin or plate 36 comes into abutment with the second longitudinal end 24 of the inflator 18 by means of a side face. Preferably, in the arrangement shown in Fig. 7, the pin 36 is connected to the housing base 4, at its end which is forward in the direction of insertion, by way of a predetermined break point. This makes it possible to make the pin 36 in one piece with the housing 2. In order to fix the inflator 18 in the housing 2, the pin 36 is pressed into the opening 38 in such a way that it comes into abutment with the second longitudinal end 24 of the inflator 18. Instead of being inserted at the housing base 4, the pin or plate 36 may also be inserted into the interior of the housing through one of the side walls or a cover in order to come into abutment with the inflator.

The inserted condition of the pin 36 is shown in Fig. 8. Here, the inflator 18 is fixed between the transverse wall 6 and the pin 36 or plate 36 inserted into the opening 38 in the base 4 of the housing. Radial fixing is performed as explained previously, by the securing clip 12, the support web 14 and the opening 16.

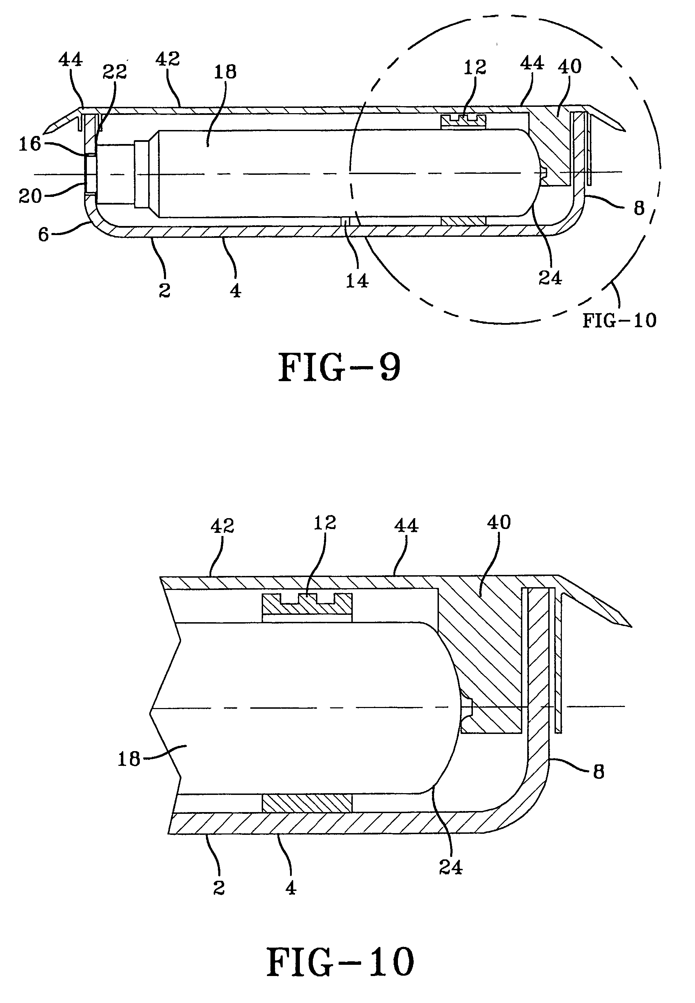

Fig. 9 shows a further alternative embodiment. This embodiment also differs from the previously described embodiments only in the arrangement and shape of the securing element. All the other parts are identical to the elements described previously, and for this reason the same reference numerals have been retained. The arrangement of the inflator 18 in the housing 2 corresponds to the arrangement described with reference to Fig. 7. In the embodiment described in Fig. 9, the securing element 40 is a projection on a cover 42 of the housing 2 or of the airbag module.

The precise shaping of the securing element 40 according to Fig. 9 is explained with reference to the enlarged detail A shown in Fig. 10. The cover 42 closes off from the outside the housing 2 with the inflator 18 and airbag (not shown here) arranged therein. At the same time, the cover 42 closes off the airbag module from the interior of the vehicle and preferably forms part of a vehicle inner cladding. Predetermined break points 44 are provided in the cover 42, and these make it possible for the cover 42 to open so that an airbag (not shown here) can come out. Preferably constructed in one piece with the cover 42 is a securing element in the form of a projection 40. The projection 40 extends from the cover 42 into the interior of the housing 2, so that it comes into abutment with the second longitudinal end 24 of the inflator 18. This fixes the inflator 18 in its longitudinal direction between the transverse or side wall 6 and the projection 40 on the cover 42. Here too, radial fixing is ensured by the opening 16, the securing clip 12 and the support web 14. The projection 40 is preferably arranged in a region of the cover 42 which is fixedly connected to the housing 2 even when the predetermined break points 44 are broken open and the cover 42 opens. This means that the projection 40 is arranged outside an opening for coming out defined by the predetermined break points 44. It is thus ensured that the inflator 18 continues to be fixed securely in the housing 2 even when the airbag comes out.

## Claims

1. An airbag module having at least a housing (2) and an inflator (18), in which the inflator (18) is pushed into a securing device (12) on the housing in a longitudinal direction of the inflator (18), with the inflator (18) abutting by means of a first longitudinal end (20) against an abutment (16) on the housing (2), and a securing element (26; 32; 36; 40) being inserted into the housing (2) behind the second, opposing longitudinal end (24) of the inflator (18) and abutting against the second longitudinal end (24), wherein the securing device (12) surrounds the inflator (18) in the vicinity of its second longitudinal end (24), the abutment is a cutout (16) in a housing wall (6), in which the inflator (18) engages, with the inflator (18) having in the region of its first longitudinal end (20) at least one shoulder (22) which abuts against the edge of the cutout (16) and supports the inflator (18) in the longitudinal direction thereof, and the securing element (26; 32; 36; 40) is a form-fitting and/or force-fitting component, in particular a block which fills a free space between the second longitudinal end (24) of the inflator (18) and an opposing housing portion (8).

2. An airbag module according to claim 1, in which the securing element (26; 32; 36) is arranged on the housing (2) by way of a non-detachable, in particular plastically and/or elastically deformable connection and may be brought into a position in the region of the second longitudinal end (24) of the inflator (18).

3. An airbag module according to one of the preceding claims, in which the securing element (32; 36;) may be inserted into the housing (2) through a cutout (30; 38) so that it comes into contact with the second longitudinal end (24) of the inflator (18).

4. An airbag module according to one of the preceding claims, in which the housing (2) has at least one cover (42), and the securing element is a projection (40) on the cover (42) such that the projection (40) juts into the interior of the housing (2) and is in contact with the second longitudinal end (24) of the inflator (18).

5. An airbag module according to one of the preceding claims, in which the securing device (12) is an annular clip which surrounds the inflator (18) at its outer periphery.

6. An airbag module according to Claim 5, in which the annular clip (12) projects from an inner side (4) of the housing (2).

7. An airbag module according to one of the preceding claims, in which the housing (2) and the securing device (12) are made in one piece from synthetic material or from cast light metal.

## Patentansprüche

1. Airbagmodul mit zumindest einem Gehäuse (2) und einem Gasgenerator (18), bei welchem der Gasgenerator (18) in eine Befestigungseinrichtung (12) an dem Gehäuse in einer Längsrichtung des Gasgenerators (18) eingeschoben ist, wobei der Gasgenerator (18) mit einem ersten Längsende (20) an einem Anschlag (16) an dem Gehäuse (2) anliegt, und hinter dem zweiten, entgegengesetzten Längsende (24) des Gasgenerators (18) in das Gehäuse (2) ein Sicherungselement (26; 32; 36; 40) eingesetzt ist, welches an dem zweiten Längsende (24) anliegt, wobei die Befestigungseinrichtung (12) den Gasgenerator (18) in der Nähe seines zweiten Längsendes (24) umgreift, wobei der Anschlag eine Ausnehmung (16) in einer Gehäusewandung (6) ist, in die der Gasgenerator (18) eingreift, wobei der Gasgenerator (18) im Bereich seines ersten Längsendes (20) vorzugsweise zumindest eine Schulter (22) aufweist, welche am Rand der Ausnehmung (16) anliegt und den Gasgenerator (18) in dessen Längsrichtung stützt und wobei das Sicherungselement (26; 32; 36; 40) als formschlüssiges und/oder kraftschlüssiges Bauteil, insbesondere als Klotz ausgebildet, ist, welcher einen Freiraum zwischen dem zweiten Längsende (24) des Gasgenerators (18) und einem gegenüberliegenden Gehäuseabschnitt (8) ausfüllt.

2. Airbagmodul nach einem der vorangehenden Ansprüche, bei welchem das Sicherungselement (26; 32; 36) über eine nicht lösbare, insbesondere plastisch und/oder elastisch verformbare Verbindung an dem Gehäuse (2) angeordnet und in eine Position in den Bereich des zweiten Längsendes (24) des Gasgenerators (18) bringbar ist.

3. Airbagmodul nach einem der vorangehenden Ansprüche, bei welchem das. Sicherungselement (32; 36;) durch eine Ausnehmung (30; 38) in das Gehäuse (2) eingesetzt ist, so daß es mit dem zweiten Längsende (24) des Gasgenerators (18) in Kontakt gelangt.

4. Airbagmodul nach einem der vorangehenden Ansprüche, bei welchem das Gehäuse (2) zumindest eine Abdeckung (42) aufweist und das Sicherungselement als Vorsprung (40) an der Abdeckung (42) derart ausgebildet ist, daß der Vorsprung (40) in das Innere des Gehäuses (2) vorsteht und mit dem zweiten Längsende (24) des Gasgenerators (18) in Kontakt ist.

5. Airbagmodul nach einem der vorangehenden Ansprüche, bei welchem die Befestigungseinrichtung (12) als Ringbügel ausgebildet ist, welcher den Gasgenerator (18) an seinem äußeren Umfang umgreift.

6. Airbagmodul nach Anspruch 5, bei welchem der Ringbügel (12) von einer Innenseite (4) des Gehäuses (2) vorsteht.

7. Airbagmodul nach einem der vorangehenden Ansprüche, bei welchem das Gehäuse (2) und die Befestigungseinrichtung (12) einstückig aus Kunststoff oder aus gegossenem Leichtmetall hergestellt sind.

## Revendications

1. Module de coussin gonflable possédant au moins un boîtier (2) et un gonfleur (18), dans lequel le gonfleur (18) est inséré dans un dispositif de fixation (12) sur le boîtier dans la direction longitudinale du gonfleur (18), le gonfleur (18) butant au moyen d'une première extrémité longitudinale (20) contre une butée (16) sur le boîtier (2), et un élément de fixation (26; 32; 36; 40) étant inséré dans le boîtier (2) derrière la seconde extrémité longitudinale opposée (24) du gonfleur (18) et butant contre la seconde extrémité longitudinale (24), dans lequel le dispositif de fixation (12) entoure le gonfleur (18) au voisinage de sa seconde extrémité longitudinale (24), la butée est une découpe (16) dans la paroi de boîtier (6), dans laquelle le gonfleur (18) s'engage, le gonfleur (18) possédant dans la région de sa première extrémité longitudinale (20) au moins une épaule (22) qui bute contre le bord de la découpe (16) et supporte le gonfleur (18) dans la direction longitudinale de celui-ci, et l'élément de fixation (26; 32; 36; 40) est un composant coopérant par complémentarité de forme et/ou application de force, en particulier un bloc qui remplit l'espace libre entre la seconde extrémité longitudinale (24) du gonfleur (18) et la partie de boîtier lui faisant face (8).

2. Module de coussin gonflable selon la revendication 1, dans lequel l'élément de fixation (26; 32; 36) est agencé sur le boîtier (2) au moyen d'un élément inamovible, en particulier un élément de liaison plastiquement et/ou élastiquement déformable et peut être mis en position dans la région de la seconde extrémité longitudinale (24) du gonfleur (18).

3. Module de coussin gonflable selon une quelconque des revendications précédentes, dans lequel l'élément de fixation (32; 36) peut être inséré dans le boîtier (2) à travers une découpe (30; 38) de sorte qu'il vienne en contact avec la seconde extrémité longitudinale (24) du gonfleur (18).

4. Module de coussin gonflable selon une quelconque des revendications précédentes, dans lequel le boîtier (2) possède au moins un couvercle (42), et l'élément de fixation est une saillie (40) sur le couvercle (42) telle que la saillie (40) se prolonge au sein du boîtier (2) et soit en contact avec la seconde extrémité longitudinale (24) du gonfleur (18).

5. Module de coussin gonflable selon une quelconque des revendications précédentes, dans lequel le dispositif de fixation (12) est une attache annulaire qui entoure le gonfleur (18) sur sa périphérie extérieure.

6. Module de coussin gonflable selon la revendication 5, dans lequel l'attache annulaire (12) fait saillie à partir d'un côté intérieur (4) du boîtier (2).

7. Module de coussin gonflable selon une quelconque des revendications précédentes, dans lequel le boîtier (2) et le dispositif de fixation (12) sont fabriqués en une pièce constituée de matériau synthétique ou de métal léger coulé.
